# EUROPEAN PATENT SPECIFICATION

(11) **EP 4 081 087 B1**
(45) Date of publication and mention of the grant of the patent: **21.05.2025**
(21) Application number: 21707992.0
(22) Date of filing: 25.02.2021
(51) Int. Cl.: A47J 31/44

(54) **EMULSIFYING DEVICE FOR EMULSIFYING MILK AND COFFEE MACHINE THAT COMPRISES SAID EMULSIFYING DEVICE FOR EMULSIFYING MILK**
EMULGIERVORRICHTUNG ZUM EMULGIEREN VON MILCH UND KAFFEEMASCHINE MIT DER EMULGIERVORRICHTUNG ZUM EMULGIEREN VON MILCH
DISPOSITIF D'ÉMULSIFICATION POUR ÉMULSIFIER LE LAIT ET MACHINE À CAFÉ COMPRENANT LEDIT DISPOSITIF POUR L'ÉMULSIFICATION DU LAIT

(30) Priority: 18.03.2020 IT 202000005713
(43) Date of publication of application: 02.11.2022
(73) Proprietor: De'Longhi Appliances S.r.l., 31100 Treviso (IT)
(72) Inventor: PANCIERA, Antonio, 31100 Treviso (IT); ROSETTA, Simone, 31100 Treviso (IT)
(74) Representative: Rapisardi, Mariacristina
(86) International application number: PCT/EP2021/054641
(87) International publication number: WO 2021/185548

(56) References cited:
- EP-A1- 1 815 774
- US-A1- 2013 145 936
- US-A1- 2015 150 408
- US-A1- 2016 367 071
- US-A1- 2017 238 755
- US-A1- 2018 103 792

## Description

The present invention refers to a coffee machine that comprises an emulsifying device for emulsifying milk.

To date, coffee machines are known that have emulsifying devices for emulsifying milk equipped with a mixing chamber where a flow of steam generates, by Venturi effect, a vacuum, which draws the air needed to emulsify the milk from a specific air supply line.

In some known emulsifying devices for emulsifying milk such as cappuccino makers, the mixing chamber is immersed in a milk container where the milk is emulsified directly.

In other emulsifying devices, a milk container is provided that has a milk supply line in communication with the mixing chamber. In this case, the milk is also sucked by Venturi effect into the mixing chamber, where it is emulsified and then dispensed externally. In both types of emulsifying device, the degree of milk froth is selected by modifying the proportions between the flow of air and the flow of steam. By increasing the quantity of air in the mixture, it is possible to obtain a greater quantity of foam.

In general, the improved emulsion results are obtained by using full fat or partially skimmed cow's milk and supplying the milk at a temperature between 3°C and 7°C.

Nevertheless, the use has spread of vegetable beverages that are commonly called "milk" that have physical and chemical features that are completely different from cow's milk and thus require different emulsifying parameters. In particular, these vegetable beverages have boiling points and denaturing points of proteins that are different from the boiling and denaturing points of cow's milk and can thus rise excessively in temperature during the emulsion operation, causing squirts that may potentially injure the user, spoiling the foam, with consequent reduction of the quality of the dispensed product. Further, owing to the cheapness of long-life milk, which is normally kept at ambient temperature, there are many cases of use in which the machine is not regularly provided with milk at low temperature before the emulsion operation.

There is thus a need to provide an emulsion system for all types of milk (animal or vegetable) that enables high quality foam to be obtained without depending on the ability of the user or on the initial temperature of the milk.

US 2013/145936 Al discloses an apparatus for heating and frothing a beverage product, US 2018/103792 Al shows a emulsifying device for emulsifying milk and a coffee machine comprising said emulsifying device for emulsifying milk.

The technical task of the present invention is therefore to realize an emulsifying device for emulsifying milk that makes it possible to eliminate the decried technical drawbacks of the prior art.

Within the scope of this technical task, one object of the invention is to realize a coffee machine comprising an emulsifying device for emulsifying milk that makes it possible to accurately adjust the temperature during the operation of emulsifying the milk regardless of the skills of the user and of the type of milk used.

Another object of the invention is to realize a coffee machine comprising an emulsifying device for emulsifying milk that enables precise adjustment of the froth of the milk, while proving to be simple in construction and low in cost.

A further object of the invention is to provide an emulsifying method for emulsifying a milk using the device of the invention.

The technical task and these and other objects according to the present invention are achieved by realizing a coffee machine comprising an emulsifying device for emulsifying milk, comprising a Venturi mixing chamber, a circuit for supplying air and having an air outlet connected to the mixing chamber, and a circuit for supplying steam having a steam outlet connected to the mixing chamber, wherein said circuit for supplying air comprises at least one first air inlet line equipped with a first shut-off solenoid valve wherein the device comprises a temperature sensor of the emulsified milk and an energy and data exchange means for the sensor, wherein it further comprises an internal controller programmed to perform the following steps:
a. activating the circuit for supplying steam to initiate the Venturi effect in the mixing chamber;
b. activating the temperature sensor for controlling the temperature of the emulsified milk;
c. determining the temperature (T_{c}) of the emulsified milk, optionally comparing such temperature T_{c} with a predefined safety temperature (Tₛ), and in the event in which T_{c} ≥ Tₛ, interrupting the flow of steam and stopping the emulsion operation;
d. activating the circuit for supplying air to start emulsifying the milk;
e. determining the temperature (T_{c}) of the emulsified milk and comparing such temperature T_{c} with a predefined boiling temperature (Tₑ);
f. if T_{c} ≥ Tₑ, activating the circuit for supplying air to reduce the flow of air and therefore reduce the temperature in the mixing chamber;
g. repeating steps e-f until the completion of dispensing.

According to the invention, a method for emulsifying milk according to claim 10 is also provided.

Preferred embodiments of the invention are disclosed in the appended claims. Further characteristics and advantages of the invention will more fully emerge from the description of a preferred but not exclusive embodiment of the emulsifying device for emulsifying milk according to the invention, illustrated by way of non-limiting example in the accompanying figures of the drawings, in which:
figure 1 shows a section of the emulsifying device according to a first preferred embodiment of the invention, connected to the coffee machine;
figure 2 shows a section of the partially exploded emulsifying device of figure 1;
figure 3 shows in section the emulsifying device of figure 1 disengaged from the coffee machine.

With reference to the figures mentioned, an emulsifying device for emulsifying milk is shown indicated overall with the reference number 1.

The emulsifying device 1 is connectable in the manner that will be seen to a coffee machine 20.

The coffee machine 20 comprises a controller 40, a control panel (not shown) provided with an ON button and selection buttons of the dispensing cycle, suitable steam generating means (not shown), suitable water heating means (not shown), and an infusion unit (not shown) connected to the water heating means and to an outer coffee dispenser (not shown).

The aforesaid components of the coffee machine 20 are housed in an outer frame 21 of the coffee machine 20.

The emulsifying device 1 comprises a Venturi effect mixing chamber 2, a circuit 3 for supplying air having an air outlet 22 connected to the mixing chamber, and a circuit 4 for supplying steam having a steam outlet 23 connected to the mixing chamber 2.

The emulsifying device 1 further comprises a temperature sensor 100 of the emulsified milk and energy and data exchange means 101 for the sensor 100. Advantageously, the circuit 3 for supplying air has a first air inlet line 5 provided with a first shut-off solenoid valve 8, and optionally at least one second air inlet line 6 provided with a second shut-off solenoid valve 9.

In particular, the circuit 3 for supplying air also has a third air inlet line 7 provided with a third shut-off solenoid valve 10.

The circuit 3 for supplying air further comprises a manifold 42 into which the air inlet lines 5, 6, and 7 enter.

Preferably, the second air inlet line 6 has a minimum passage section 12 of area greater than the area of the minimum passage section 11 of the first air inlet line 5. The third air inlet line 7, if provided, preferably has in turn a minimum passage section 13 of area greater than the area of the minimum passage section 12 of the second air inlet line 6.

The minimum passage sections 11, 12, 13 can be provided in the air inlet lines 5, 6, 7, upstream or downstream of the solenoid valves 8, 9, 10.

Each air inlet line 5, 6, 7 has the inlet end in communication with atmospheric air. The solenoid valves 8, 9, 10 can be controlled by the controller 40 of the coffee machine 20.

The solenoid valves 8, 9, 10 can be of digital (on or off) type or of proportional control type.

The inlet lines 5, 6, 7 are optionally provided with an air filter 14, 15, 16 preferably positioned upstream of the solenoid valves 8, 9, 10 and in particular at the inlet end of the air inlet lines 5, 6, 7.

The circuit 3 for supplying air is divided into a first section 3a and a second section 3b that are reciprocally connected in a disconnectable manner.

The first section 3a of the circuit 3 for supplying air comprises the air inlet lines 5, 6, 7, the solenoid valves 8, 9, 10 and the manifold 42.

The second section 3b of the circuit 3 for supplying air comprises the outlet 22 of the circuit 3 for supplying air.

Also the circuit 4 for supplying steam comprises a first section 4a and a second section 4b reciprocally connected in a disconnectable manner.

The first section 4a of the circuit 4 for supplying steam comprises an inlet (not shown) of the circuit 4 for supplying steam connected to the steam generating means present inside the frame 21 of the coffee machine 20.

The second section 4b of the circuit 4 for supplying steam comprises the outlet 23 of the circuit 4 for supplying steam.

The temperature sensor 100 is so positioned as to determine the temperature of the emulsified milk, and thus advantageously in the mixing chamber 2 as in the point further above. Optionally, the temperature sensor 100 can be arranged along the dispensing line 37 of the emulsified milk.

The sensor 100 is provided with energy and data exchange means 101, because it has to be able to communicate with the controller 40.

The first section 3a of the circuit 3 for supplying air and the first section 4a of the circuit 4 for supplying steam are mounted inside the frame 21 of the coffee machine 20.

Inside the frame 21, there is also a first part 101a of the energy and data exchange means 101.

The second section 3b of the circuit 3 for supplying air and the second section 4b of the circuit 4 for supplying steam are on the other hand mounted jointly to the mixing chamber 2 in a support body 24 outside the frame 21.

In the support body 24, there is also a second part 101b of the energy and data exchange means 101.

The two parts101a and 101b are reciprocally connected in a disconnectable manner.

The frame 21 of the coffee machine 20 supports a connector 25 having a connection fitting 26 between the first section of circuit 3a for supplying air and the second section of circuit 3b for supplying air, and a connection fitting 27 between the first section of circuit 4a for supplying steam and the second section 4b of the circuit 4 for supplying steam.

In the connector 25, there is a connection fitting 101c between the first and second part 101a and 101b of the energy and data exchange means 101.

In the solution illustrated, the energy and data exchange means 101 is formed by an electric line that connects the temperature sensor 100 to the controller 40.

In this case, the first part 101a of the energy and data exchange means 101 is a first section of the electrical line, the second part 101b of the energy and data exchange means 101 is a second section of the electrical line, and the fitting 101c is an electrical connector that connects the two sections of electrical line.

The connector 25 has a part inside the frame 21 and a part that through suitable openings in the thickness of the front wall of the frame 21 extends outside the frame 21.

At least in the part outside the frame the fittings 26, 27 and 101c of the connector 25 extend rectilinearly in a direction parallel to the resting surface 28 of the coffee machine 20.

The support body 24 is connected disconnectably to the connector 25.

The support body 24 in particular has a sleeve 29 in a form joined to the fitting 26 and provided with a suitable gasket 31 for seal connection to the fitting 26, and a sleeve 30 in a form joined to the fitting 27 and provided with a suitable gasket 32 for seal connection to the fitting 27.

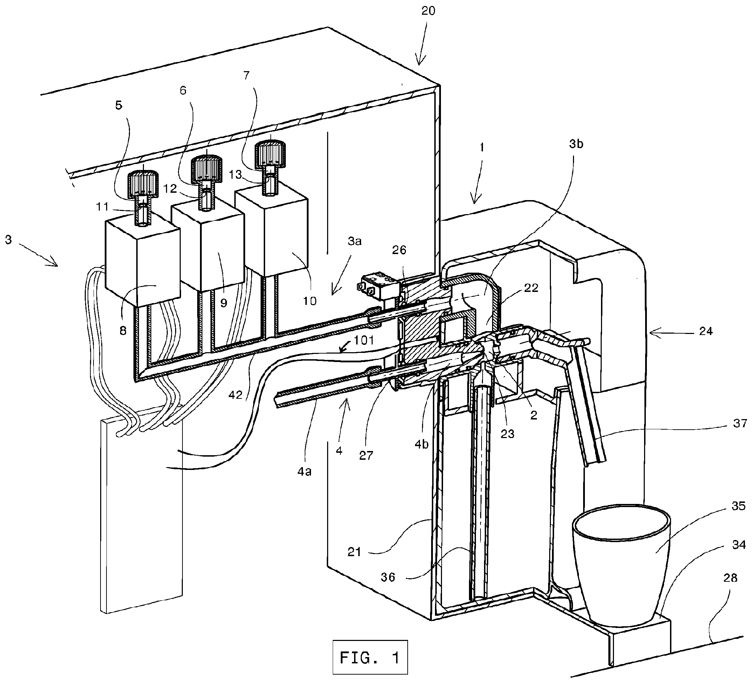

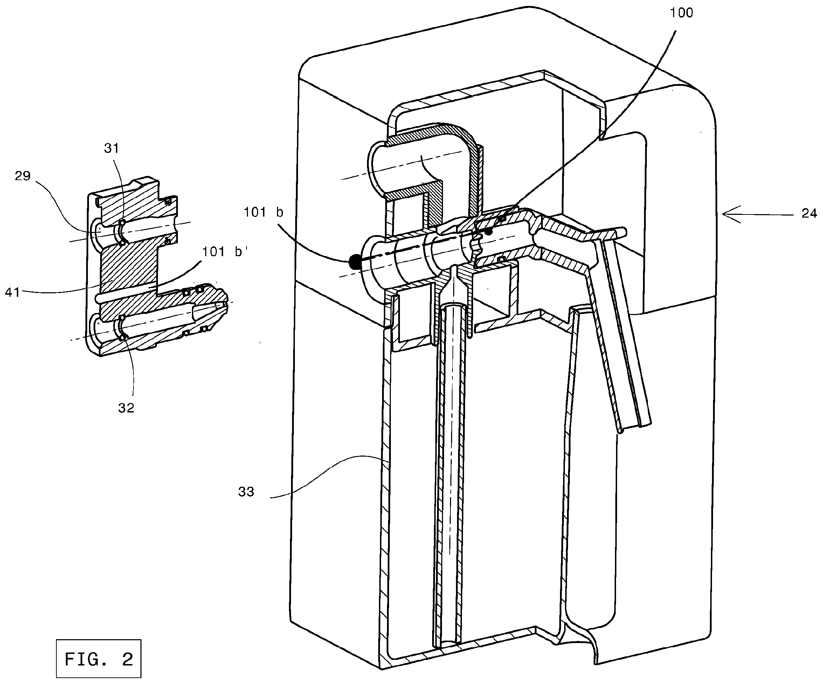

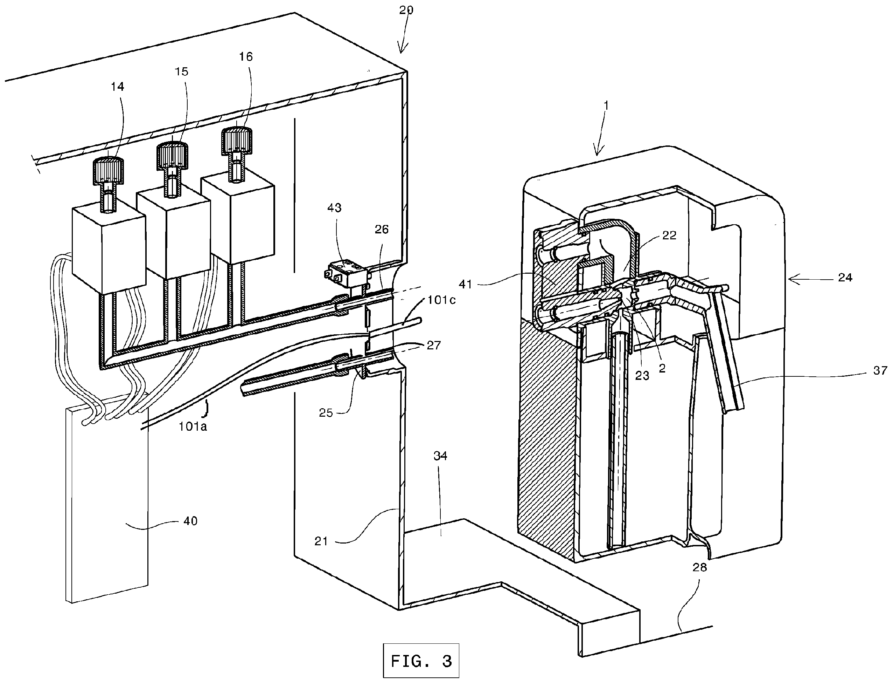

The sleeves 29, 30 are preferably realised as a single piece 41 also housing a through channel 101b' where the connector 101c engages that connects the first part 101a to the second part 101b of the energy and data exchange means 101. With reference to the solution disclosed in figures 1, 2, and 3, the piece 41 is also disengageable from the rest of the support body 24, which is thus more easily accessible internally for inspection and cleaning.

The support body 24 is connectable to the connector 25 with a movement according to a connection axis parallel to the resting surface 28 of the coffee machine 20.

In the embodiment of the invention illustrated in figure 1, the support body 24 engages with a container of the milk 33.

The support body 24 supports also in this case a milk supply line 36 that is connected to the mixing chamber 2 and extends into the container of the milk 33 until the bottom thereof, and a dispensing line 37, which dispensing line 37 is also connected to the mixing chamber 2.

The outlet 23 of the circuit 4 for supplying steam is shaped as a Venturi tube to generate in the mixing chamber 2 a vacuum that draws into the mixing chamber 2 air sucked from the circuit 3 for supplying air and milk sucked from milk supply line 36.

The support body 24 is positioned in front of the front wall of the frame 21 and acts in particular as a lid for the container of the milk 33, which in turn rests on a suitable resting surface 34 that extends in front of the frame 21 from the base of the coffee machine 20.

The dispensing line 37 protrudes laterally from the container of the milk 33 and above an area of the resting surface 34 intended for positioning a collecting cup 35 of the product dispensed by the dispensing line 37.

The operation of the emulsifying device is as follows.

It must first be pointed out beforehand that the controller 40 is able to recognize the presence of an emulsifying device 1 connected to the coffee machine, by first sensor means 43 of known type (for example of mechanical or magnetic type), and also to recognize the type of emulsifying device 1 present, by second sensor means 44, which is also of known type (for example of mechanical or magnetic type). The presence of the temperature sensor 100 is also recognized by the interface of the controller 40 with the energy and data exchange means 101.

The controller of the coffee machine 20 is programmed with an emulsion programme that is capable of dispensing milk froth regardless of the type of milk used and of the initial temperature of the milk. Optionally, a recognition programme for recognizing the presence of milk can be run by the controller. The operation of these programmes is explained below.

The first step of the programme, after the user has actuated the machine, opens the circuit 4 for supplying steam so as to initiate suction of milk into the mixing chamber 2 through the Venturi effect.

At this point, the temperature sensor 100 is driven to control the temperature of the emulsified milk, thus determining the temperature T_{c}.

Preferably, the controller can determine the presence or absence of milk by simply comparing the temperature Tc with a predefined safety threshold Tₛ: if the milk is not present, the detected temperature will rapidly reach the known temperature of the steam, indicating that the milk is missing. Thus if T_{c} ≥ Tₛ, the flow of steam is interrupted and the emulsion operation is stopped.

Subsequently, the circuit 3 for supplying air to start emulsifying the milk is actuated.

One or more solenoid valves are opened, thus enabling the air to enter the mixing chamber 2 and reducing the quantity of milk in the mixture.

As in general milk is at a lower temperature than the air, the temperature detected by the sensor 100 will start to increase.

After a predefined lapse of time, the sensor again detects the temperature T_{c} and compares the temperature with a predefined boiling temperature Tₑ.

If T_{c} ≥ Tₑ, the flow of air sucked by the Venturi effect in the chamber is reduced by the controller 40 acting on one or more solenoid valves, thus permitting automatically an increase in the flow of milk sucked by the Venturi effect in the chamber with a resulting reduction of temperature.

Lastly, the step of detecting and comparing between T_{c} and Tₑ is repeated until dispensing of the beverage is completed, possibly by acting on the opening of one or more solenoid valves at each cycle.

Through this method control, it is indifferent which type of milk is used in the machine and it is equally indifferent what the initial temperature was of the milk.

In particular, it is shown that the safety temperature Tₛ of the steam is a value known from the design of the device, whereas the boiling temperature Tₑ can be easily determined by simple emulsion tests and ordinary experimentation with various types of commercially available milk.

Clearly, the number of solenoid valves and the manner in which they are controlled can be varied according to need.

If in an extreme case only one digital solenoid valve is provided, when T_{c} ≥ Tₑ the flow of air into the chamber is interrupted by the controller 40, which closes the solenoid valve, thus automatically permitting an increase in the flow of milk sucked by the Venturi effect in the chamber, with a subsequent reduction of the temperature.

The temperature and frothing can be regulated with a cyclical control of the state of the solenoid valve during production of the beverage.

The emulsifying device is accordingly able, with a cheap and simple system, to vary with extreme precision the production of froth of the milk regardless of the type of milk used and of the initial temperature of the milk.

Further, through the aforesaid temperature control, it is avoided that spurts of milk are created in the end container due to boiling of the milk in the mixing chamber, with a consequent increase in user safety.

The user is not required to have any particular skill for performing the operation successfully as the contribution of the user is limited to the programme start input. A table is shown below relating to the control owing to the temperature sensor performed with two air solenoid valves Ev1 and Ev2 and a solenoid valve Ev3 along the supply circuit for supplying steam that switches between a mixing chamber supply status and steam discharge status.

| | | thresholds T sensor °C | Ev1 | Ev2 | Ev3 | Steam dispensing (t) |
|---|---|---|---|---|---|---|
| 1 | Steam dispensing with milk in milk container comprised between 3 -10°C | 50-65 | ON | OFF | ON | ON |
| 2 | Steam dispensing with milk in milk container >10°C | 55-70 | ON 50%\OFF 50% | OFF | ON | ON |
| 3 | Steam dispensing with milk in milk container >25°C | >70 | ON 15%\OFF 85% | OFF | ON | ON |
| 4 | Steam dispensing without milk in milk container | >100°C | OFF | OFF | OFF | OFF |
| 5 | Cleaning cycle | 80-100 | ON | ON | ON | |
| 6 | Steam discharge | \ | OFF | OFF | | |

The temperature sensor allows the controller to detect the temperature difference and to activate\deactivate the solenoid valves EV1-EV2 in function of the temperature detected in the mixing chamber.

Activating the solenoid valves EV 1 \ EV2 influences the quantity of air sucked during steam\milk dispensing and indirectly the efficiency of suction of the milk, compensating the greater temperature detected with the increase in sucked milk with respect to the steam, thus contributing to lowering the total temperature of the emulsion.

The temperature sensor detecting a predefined temperature threshold is able to interrupt dispensing of steam and by the solenoid valve EV3 instantaneously interrupt dispensing of milk in the event for example of absence of milk or an insufficient quantity of milk for completing the preselected recipe.

From the table it is in particular clear that in cases 1, 2 and 3, during the period of time t of the dispensing of the steam to the mixing chamber (Ev3 on), the solenoid valve Ev1 supplies air to the mixing chamber (Ev1 on) for a fraction of time that is a percentage of the time t that decreases as the detected temperature increases.

## Claims

1. A coffee machine (20) comprising an emulsifying device (1) for emulsifying milk, comprising a Venturi mixing chamber (2), a circuit (3) for supplying air and having an air outlet (22) connected to the mixing chamber (2), and a circuit (4) for supplying steam and having a steam outlet (23) connected to the mixing chamber, where said circuit (3) for supplying air comprises at least a first air inlet line (5) equipped with a first shut-off solenoid valve (8),
the emulsifying device (1) comprising a temperature sensor (100) of the emulsified milk and an energy and data exchange means (101) for the sensor (100), **characterised in that** it comprises an internal controller (40) programmed to perform the following steps:
a. activating the circuit (4) for supplying steam to initiate the Venturi effect in the mixing chamber (2);
b. activating the temperature sensor (100) for controlling the temperature of the emulsified milk;
c. determining the temperature (T_{c}) of the emulsified milk, optionally comparing such temperature T_{c} with a predefined safety temperature (Tₛ), and in the event in which T_{c} ≥ Tₛ interrupting the flow of steam and stopping the emulsion operation;
d. activating the circuit (3) for supplying air to start emulsifying the milk;
e. determining the temperature (T_{c}) of the emulsified milk and comparing such temperature T_{c} with a predefined boiling temperature (Tₑ);
f. if T_{c} ≥ Tₑ activating the circuit (3) for supplying air to reduce the flow of air and therefore reduce the temperature in the mixing chamber (2);
g. repeating steps e-f until the completion of the dispensing..

2. The coffee machine (20) according to the preceding claim, **characterized in that** it comprises at least a second air inlet line (6) provided with a second shut-off solenoid valve (9), said first and second air inlet lines (5, 6) that preferably have a minimum passage section (11, 12) of a different area.

3. The coffee machine (20) according to any one of the preceding claims, **characterized in that** said circuit (3) for supplying air comprises a first section (3a) comprising said air inlet lines (5, 6) and said solenoid valves (8, 9), and a second section (3b) comprising said air outlet (22) and connected disconnectably to said first section (3a).

4. The coffee machine (20) according to any one of the preceding claims, **characterized in that** said circuit (4) for supplying steam comprises a first section (4a) comprising said steam inlet and disconnectably connected to a second section (4b) comprising said steam outlet (23).

5. The coffee machine (20) according to any preceding claim, **characterized in that** it comprises an outer frame (21) within which said first section of the circuit (4a) for supplying steam and said first section of the circuit (3a) for supplying air are mounted, and a first part (101a) of said energy and data exchange means (101).

6. The coffee machine (20) according to the preceding claim, **characterized in that** said second section of the circuit (3b) for supplying air, said second section of the circuit (4b) for supplying steam, a second part (101b) of said energy and data exchange means (101), and said mixing chamber (2) are mounted in a supporting body (24) external to said frame (21).

7. The coffee machine (20) according to the preceding claim, **characterized in that** said frame (21) supports a connector (25) arranged through the wall thickness of said frame (21) and exhibiting a connection fitting (26) between said first and second sections of the air circuit (3a, 3b) and a connection fitting (27) between said first and second sections of the steam circuit (4a, 4b) and a connection fitting (101c) between said first and second part (101a, 101b) of said energy and data exchange means (101).

8. The coffee machine (20) according to the preceding claim, **characterized in that** said supporting body (24) is disconnectably connected to said connector (25).

9. The coffee machine (20) according to any one of claims 6 to 8, **characterized in that** said supporting body (24) is supported by a milk container (33) having a milk supply line (36) having a milk outlet connected to said mixing chamber (2).

10. A method for emulsifying milk comprising the following steps:
a. activating a circuit (4) for supplying steam to a Venturi mixing chamber (2) to initiate a Venturi effect in the Venturi mixing chamber (2) to generate in the Venturi mixing chamber (2) a vacuum that draws air and said milk into the Venturi mixing chamber (2);
b. activating a temperature sensor (100) for controlling the temperature of the emulsified milk in the Venturi mixing chamber (2);
c. determining the temperature (T_{c}) of the emulsified milk in the Venturi mixing chamber (2), optionally comparing such temperature T_{c} with a predefined safety temperature (Tₛ), and in the event in which T_{c} ≥ Tₛ interrupting the flow of steam and stopping the emulsion operation;
d. activating a circuit (3) for supplying said air in the Venturi mixing chamber (2) to start emulsifying the milk;
e. determining the temperature (T_{c}) of the emulsified milk and comparing such temperature T_{c} with a predefined boiling temperature (Tₑ);
f. if T_{c} ≥ Tₑ activating the circuit (3) for supplying air to reduce the flow of air and therefore reduce the temperature in the Venturi mixing chamber (2);
g. repeating steps e-f until the completion of the dispensing.

## Patentansprüche

1. Eine Kaffeemaschine (20), die eine Emulgierungsvorrichtung (1) zum Emulgieren von Milch umfasst, wobei die Vorrichtung eine Venturi-Mischkammer (2), einen Luftversorgungskreislauf (3) mit einem Luftauslass (22), der mit der Mischkammer (2) verbunden ist, und einen Dampfkreißlauf (4) mit einem Dampfauslass (23), der mit der Mischkammer verbunden ist, umfasst, wobei der Luftversorgungskreislauf (3) mindestens eine erste Lufteinlassleitung (5) mit einem ersten Absperr-Magnetventil (8) umfasst, wobei die Emulgierungsvorrichtung (1) einen Temperatursensor (100) für die emulgierte Milch und ein Energie- und Datenaustauschmittel (101) für den Sensor (100) umfasst, **dadurch gekennzeichnet, dass** sie einen internen Controller (40) umfasst, der so programmiert ist, die folgenden Schritte auszuführen:
a. Aktivieren des Dampfversorgungskreislaufs (4), um den Venturi-Effekt in der Mischkammer (2) zu erzeugen;
b. Aktivieren des Temperatursensors (100) zur Steuerung der Temperatur der emulgierten Milch;
c. Bestimmen der Temperatur (T_{c}) der emulgierten Milch, wobei diese Temperatur T_{c} optional mit einer vordefinierten Sicherheitstemperatur (Tₛ) verglichen wird, und im Fall, dass T_{c} ≥ Tₛ ist, wird der Dampffluss unterbrochen und der Emulgierungsvorgang gestoppt;
d. Aktivieren des Luftversorgungskreislaufs (3), um mit der Emulgierung der Milch zu beginnen;
e. Bestimmen der Temperatur (T_{c}) der emulgierten Milch und Vergleichen dieser Temperatur T_{c} mit einer vordefinierten Siedetemperatur (Tₑ);
f. Falls T_{c} ≥ Tₑ ist, Aktivieren des Luftversorgungskreislaufs (3), um den Luftstrom zu verringern und dadurch die Temperatur in der Mischkammer (2) zu senken;
g. Wiederholen der Schritte e-f bis zum Abschluss der Ausgabe.

2. Die Kaffeemaschine (20) nach dem vorstehenden Anspruch, **dadurch gekennzeichnet, dass** sie mindestens eine zweite Lufteinlassleitung (6) umfasst, die mit einem zweiten Absperr-Magnetventil (9) versehen ist, wobei die erste und zweite Lufteinlassleitung (5, 6) vorzugsweise einen minimalen Durchlassquerschnitt (11, 12) mit unterschiedlicher Fläche aufweisen.

3. Die Kaffeemaschine (20) nach einem der vorhergehenden Ansprüche, **dadurch gekennzeichnet, dass** der Luftversorgungskreislauf (3) einen ersten Abschnitt (3a) umfasst, der die Lufteinlassleitungen (5, 6) und die Magnetventile (8, 9) enthält, und einen zweiten Abschnitt (3b), der den Luftauslass (22) umfasst und lösbar mit dem ersten Abschnitt (3a) verbunden ist.

4. Die Kaffeemaschine (20) gemäß einem der vorhergehenden Ansprüche, **dadurch gekennzeichnet, dass** der Dampfversorgungskreis (4) einen ersten Abschnitt (4a) umfasst, der den Dampfeinlass aufweist und lösbar mit einem zweiten Abschnitt (4b) verbunden ist, der den Dampfauslass (23) aufweist.

5. Die Kaffeemaschine (20) gemäß einem der vorhergehenden Ansprüche, **dadurch gekennzeichnet, dass** sie einen äußeren Rahmen (21) umfasst, innerhalb dessen der erste Abschnitt des Dampfversorgungskreises (4a) und der erste Abschnitt des Luftversorgungskreises (3a) sowie ein erster Teil (101a) der Energie- und Datenaustauscheinrichtung (101) montiert sind.

6. Die Kaffeemaschine (20) gemäß dem vorhergehenden Anspruch, **dadurch gekennzeichnet, dass** der zweite Abschnitt des Luftversorgungskreises (3b), der zweite Abschnitt des Dampfversorgungskreises (4b), ein zweiter Teil (101b) der Energie- und Datenaustauscheinrichtung (101) sowie die Mischkammer (2) in einem Trägerkörper (24) außerhalb des Rahmens (21) montiert sind.

7. Die Kaffeemaschine (20) gemäß dem vorhergehenden Anspruch, **dadurch gekennzeichnet, dass** der Rahmen (21) einen Verbinder (25) trägt, der durch die Wandstärke des Rahmens (21) hindurch angeordnet ist und eine Anschlusskupplung (26) zwischen dem ersten und dem zweiten Abschnitt des Luftkreises (3a, 3b), eine Anschlusskupplung (27) zwischen dem ersten und dem zweiten Abschnitt des Dampfkreises (4a, 4b) sowie eine Anschlusskupplung (101c) zwischen dem ersten und dem zweiten Teil (101a, 101b) der Energie- und Datenaustauscheinrichtung (101) aufweist.

8. Die Kaffeemaschine (20) gemäß dem vorhergehenden Anspruch, **dadurch gekennzeichnet, dass** der Trägerkörper (24) lösbar mit dem Verbinder (25) verbunden ist.

9. Die Kaffeemaschine (20) gemäß einem der Ansprüche 6 bis 8, **dadurch gekennzeichnet, dass** der Trägerkörper (24) von einem Milchbehälter (33) getragen wird, der eine Milchzufuhrleitung (36) aufweist, wobei ein Milchauslass mit der Mischkammer (2) verbunden ist.

10. Verfahren zum Emulgieren von Milch, umfassend die folgenden Schritte:
a. Aktivieren eines Dampfversorgungskreises (4) zu einer Venturi-Mischkammer (2), um einen Venturi-Effekt in der Venturi-Mischkammer (2) zu erzeugen, durch den in der Venturi-Mischkammer (2) ein Unterdruck erzeugt wird, der Luft und die Milch in die Venturi-Mischkammer (2) einsaugt;
b. Aktivieren eines Temperatursensors (100) zur Steuerung der Temperatur der emulgierten Milch in der Venturi-Mischkammer (2);
c. Bestimmung der Temperatur (T_{c}) der emulgierten Milch in der Venturi-Mischkammer (2), optionaler Vergleich dieser Temperatur T_{c} mit einer vordefinierten Sicherheitstemperatur (Tₛ), und im Fall, dass T_{c} ≥ Tₛ, Unterbrechung des Dampfflusses und Beendigung des Emulsionsvorgangs;
d. Aktivierung eines Kreislaufs (3) zur Zufuhr der genannten Luft in die Venturi-Mischkammer (2), um mit der Emulgierung der Milch zu beginnen;
e. Bestimmung der Temperatur (T_{c}) der emulgierten Milch und Vergleich dieser Temperatur T_{c} mit einer vordefinierten Siedetemperatur (Tₑ);
f. falls T_{c} ≥ Tₑ, Aktivierung des Kreislaufs (3) zur Luftzufuhr, um den Luftstrom und dadurch die Temperatur in der Venturi-Mischkammer (2) zu verringern;
g. Wiederholung der Schritte e-f bis zum Abschluss der Ausgabe.

## Revendications

1. Machine à café (20) comprenant un dispositif d'émulsion (1) pour émulsionner le lait, comprenant une chambre de mélange Venturi (2), un circuit (3) d'alimentation en air doté d'une sortie d'air (22) reliée à la chambre de mélange (2), et un circuit (4) d'alimentation en vapeur doté d'une sortie de vapeur (23) reliée à la chambre de mélange, ledit circuit (3) d'alimentation en air comprenant au moins une première ligne d'entrée d'air (5) équipée d'une première électrovanne d'arrêt (8), le dispositif d'émulsion (1) comprenant un capteur de température (100) du lait émulsionné et un moyen (101) d'échange d'énergie et de données pour le capteur (100), **caractérisé en ce qu'**il comprend un contrôleur interne (40) programmé pour exécuter les étapes suivantes:
a. activer le circuit (4) d'alimentation en vapeur pour initier l'effet Venturi dans la chambre de mélange (2) ;
b. activer le capteur de température (100) pour contrôler la température du lait émulsionné;
c. déterminer la température (T_{c}) du lait émulsionné, comparer éventuellement cette température T_{c} avec une température de sécurité prédéfinie (Tₛ), et, dans le cas où T_{c} ≥ Tₛ interrompre le flux de vapeur et arrêter l'opération d'émulsion;
d. activer le circuit (3) d'alimentation en air pour commencer l'émulsion du lait ;
e. déterminer la température (T_{c}) du lait émulsionné et comparer cette température T_{c} avec une température d'ébullition prédéfinie (Tₑ);
f. si T_{c} ≥ Tₑ, activer le circuit (3) d'alimentation en air afin de réduire le débit d'air et ainsi abaisser la température dans la chambre de mélange (2);
g. répéter les étapes e-f jusqu'à la fin de la distribution.

2. La machine à café (20) selon la revendication précédente, **caractérisée en ce qu'**elle comprend au moins une seconde conduite d'entrée d'air (6) pourvue d'une seconde électrovanne d'arrêt (9), lesdites première et seconde conduites d'entrée d'air (5, 6) présentant de préférence une section minimale de passage (11, 12) de surface différente.

3. La machine à café (20) selon l'une quelconque des revendications précédentes, **caractérisée en ce que** ledit circuit (3) d'alimentation en air comprend une première section (3a) comprenant lesdites conduites d'entrée d'air (5, 6) et lesdites électrovannes (8, 9), et une seconde section (3b) comprenant ledit orifice de sortie d'air (22) et reliée de manière déconnectable à ladite première section (3a).

4. La machine à café (20) selon l'une quelconque des revendications précédentes, **caractérisée en ce que** ledit circuit (4) d'alimentation en vapeur comprend une première section (4a) comprenant ladite entrée de vapeur et reliée de manière déconnectable à une seconde section (4b) comprenant ladite sortie de vapeur (23).

5. La machine à café (20) selon l'une quelconque des revendications précédentes, **caractérisée en ce qu'**elle comprend une structure externe (21) à l'intérieur de laquelle sont montées ladite première section du circuit (4a) d'alimentation en vapeur et ladite première section du circuit (3a) d'alimentation en air, ainsi qu'une première partie (101a) desdits moyens d'échange d'énergie et de données (101).

6. La machine à café (20) selon la revendication précédente, **caractérisée en ce que** ladite seconde section du circuit (3b) d'alimentation en air, ladite seconde section du circuit (4b) d'alimentation en vapeur, une seconde partie (101b) desdits moyens d'échange d'énergie et de données (101), et ladite chambre de mélange (2) sont montées dans un corps de support (24) externe à ladite structure (21).

7. La machine à café (20) selon la revendication précédente, **caractérisée en ce que** ladite structure (21) supporte un connecteur (25) disposé à travers l'épaisseur de la paroi de ladite structure (21) et présentant un raccord (26) entre lesdites première et seconde sections du circuit d'air (3a, 3b), un raccord (27) entre lesdites première et seconde sections du circuit de vapeur (4a, 4b), et un raccord (101c) entre lesdites première et seconde parties (101a, 101b) desdits moyens d'échange d'énergie et de données (101).

8. La machine à café (20) selon la revendication précédente, **caractérisée en ce que** ledit corps de support (24) est connecté de manière déconnectable audit connecteur (25).

9. La machine à café (20) selon l'une quelconque des revendications 6 à 8, **caractérisée en ce que** ledit corps de support (24) est supporté par un récipient à lait (33) comportant une conduite d'alimentation en lait (36) ayant une sortie de lait reliée à ladite chambre de mélange (2).

10. Un procédé d'émulsification du lait comprenant les étapes suivantes :
a. activation d'un circuit (4) d'alimentation en vapeur vers une chambre de mélange Venturi (2) pour initier un effet Venturi dans la chambre de mélange Venturi (2), afin de générer dans la chambre de mélange Venturi (2) un vide qui aspire de l'air et ledit lait dans la chambre de mélange Venturi (2) ;
b. activation d'un capteur de température (100) pour contrôler la température du lait émulsionné dans la chambre de mélange Venturi (2) ;
c. détermination de la température (T_{c}) du lait émulsionné dans la chambre de mélange Venturi (2), avec éventuellement comparaison de cette température T_{c} avec une température de sécurité prédéfinie (Tₛ), et, dans le cas où T_{c} ≥ Tₛ, interruption du flux de vapeur et arrêt de l'opération d'émulsion;
d. activer un circuit (3) pour fournir de l'air dans la chambre de mélange Venturi (2) afin de commencer l'émulsification du lait ;
e. déterminer la température (T_{c}) du lait émulsionné et comparer cette température T_{c} à une température d'ébullition prédéfinie (Tₑ);
f. si T_{c} ≥ Tₑ, activer le circuit (3) d'alimentation en air afin de réduire le débit d'air et ainsi abaisser la température dans la chambre de mélange Venturi (2) ;
g. répéter les étapes e-f jusqu'à la fin de la distribution.
